Europäisches Patentamt

European Patent Office

Office européen des brevets

(19)

(11) Publication number: **0 337 957**
A2

# EUROPEAN PATENT APPLICATION

(12)

(21) Application number: **89830094.2**

(22) Date of filing: **07.03.89**

(51) Int. Cl.4: **B 60 H 1/00**
**G 05 G 1/04**

(30) Priority: **18.03.88 IT 5299188**

(43) Date of publication of application:
**18.10.89 Bulletin 89/42**

(84) Designated Contracting States:
**DE ES FR GB IT SE**

(71) Applicant: **BORLETTI CLIMATIZZAZIONE S.r.l.**
**Frazione Masio, 24**
**I-10046 Poirino (Torino) (IT)**

(72) Inventor: **Monasterolo, Teobaldo**
**Via degli Alteni , 12**
**I-10046 Poirino (Torino) (IT)**

(74) Representative: **Buzzi, Franco et al**
**c/o Jacobacci-Casetta & Perani S.p.A. Via Alfieri, 17**
**I-10121 Torino (IT)**

(54) Control device for motor vehicle climatization apparatus.

(57) A control device for motor-vehicle air-conditioning systems, including a control member in the form of a linearly-movable slider (B), a driven member in the form of a rotary element (C), and an intermediate transmission member constituted by an extensible and contractible lever (1). The lever is constituted by two parallel, superposed rods (2,3), each of which has a longitudinal slot (6,7) in which a projection (4,5) of the other lever is slidably engaged.

FIG. 1

EP 0 337 957 A2

Bundesdruckerei Berlin

## Description

### A control device for motor-vehicle air-conditioning systems

The present invention relates to motor-vehicle air-conditioning systems in general.

More particularly, the invention relates to a control device for such systems, including a control member in the form of a linearly-movable slider, a driven member in the form of a rotary element, and an intermediate transmission member for transforming the linear motion of the control member into rotary motion of the driven member.

A control device of this type is described and illustrated, for example, in European patent No. EP-B-0 087 084. According to this document, the transmission member comprises a lever having one end firmly fixed for rotation with the driven member and the other end articulated to a smaller connecting rod which is in turn pivotably connected to the control slider.

As well as being quite complicated from a structural point of view, this solution is subject to risk of damage due to the small dimensions of the connecting rod and of its pins for articulation to the slider and to the lever, which can cause their premature breakage.

In order to avoid this problem, the subject of the invention is a control device of the type defined at the beginning, characterised in that the transmission member comprises an extensible and contractible lever constituted by two parallel, superposed rods, each of which has a longitudinal slot in which a projection of the other rod is slidably engaged; one end of one of the two rods being couplable for rotation with the driven member and the other rod being connectible at the opposite end to the control member.

Conveniently, the projection of each rod has an enlarged retaining end with dimensions wider than the width of the slot in the other rod, and the slots have respective wider end portions for the insertion of the heads during assembly of the transmission lever.

The slot of at least one of the rods preferably has an intermediate recess on one side which acts as a seat for the positioning and retention of the projection of the other rod under the action of a lateral force applied to the transmission lever.

This invention will now be described in detail with reference to the appended drawings, provided purely by way of non-limiting example, in which:

Figure 1 is a schematic elevation of the transmission member of the control device according to the invention,

Figure 2 is a longitudinal section taken on the line II-II of Figure 1, and

Figure 3 is a perspective view showing the application of the transmission member according to the invention to a motor-vehicle air-conditioning system.

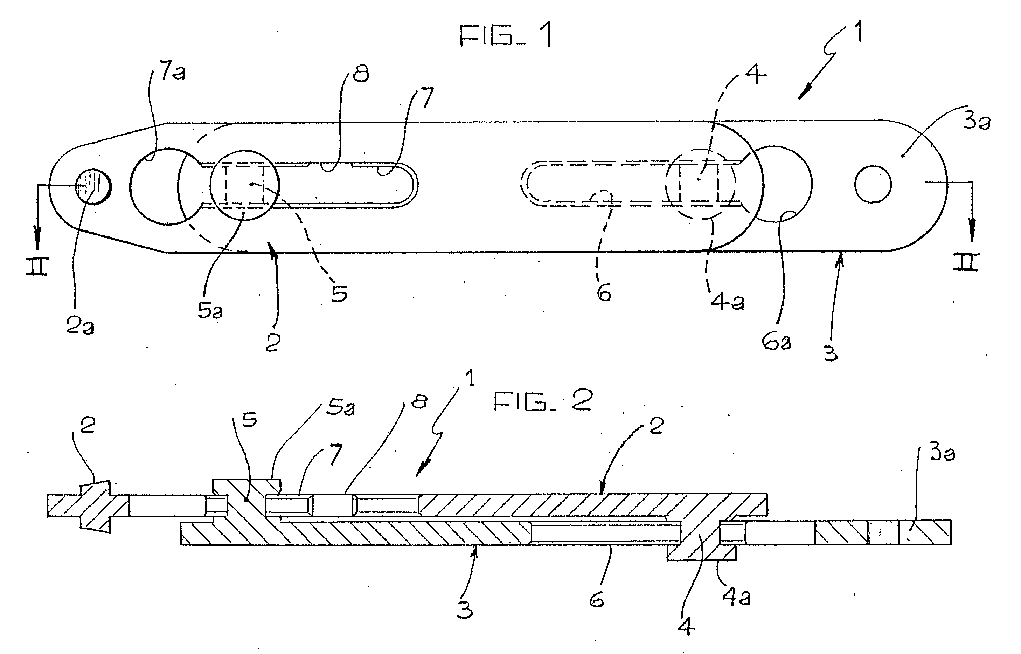

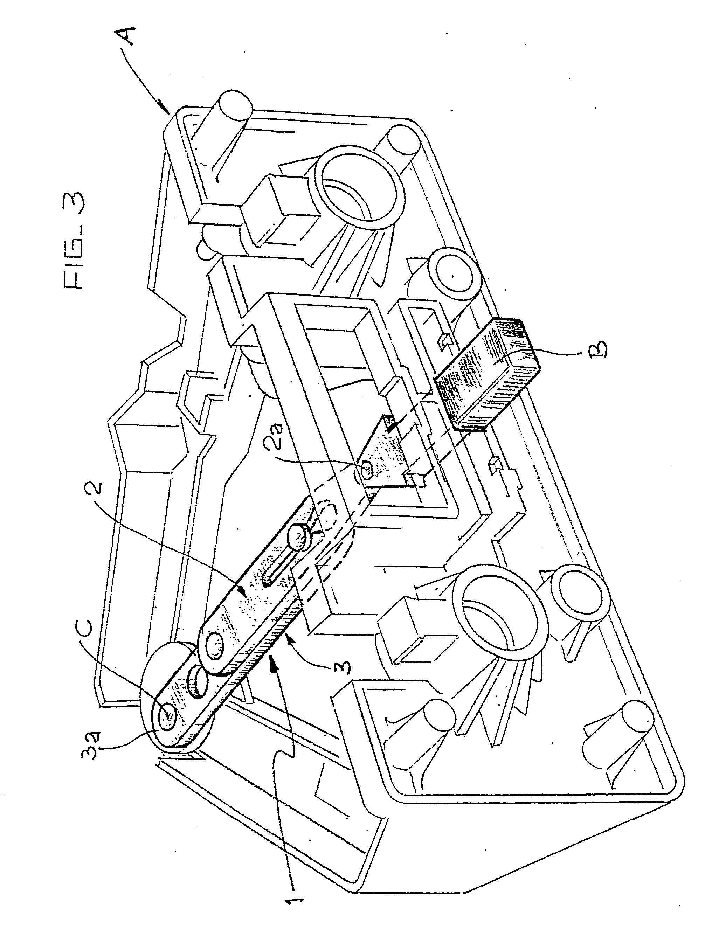

With reference to Figures 1 and 2, a transmission member usable in a control device for motor-vehicle heating and air-conditioning systems is generally indicated 1. This system, which is shown schematically in Figure 3, is of generally conventional type and includes a body A provided with a control member in the form of a linearly-movable slider B and a driven member in the form of a rotatable element C, the transmission lever 1 being interposed between them.

The transmission lever is extensible and contractible: in fact, it is constituted by two rods 2, 3, normally of moulded plastics material, which are parallel to each other and superposed and interconnected for relative sliding movement. Near one of its ends, each rod 2, 3 has a respective rectangular-section projection 4, 5, which is slidably engaged in a slot 6, 7 extending close to the opposite end of the other rod.

As can be seen from the drawings, the projections 4 and 5 have transverse dimensions which correspond substantially to the widths of the slots 6 and 7 and have enlarged head ends 4a, 5a for preventing their disengagement from the slots.

Two wider portions 6a, 7a are formed at the outer ends of the two slots 6, 7 with dimensions larger than those of the heads 4a, 5a to enable the mutual assembly of the two rods 2 and 3.

Moreover, an intermediate recess 8 is formed in one side of the slot 7 and acts as a seat for retaining the projection 5 of the rod 3 when this projection 5 is situated in correspondence with the recess 8, in use, and a lateral force is applied to the transmission lever 3 by a flexible cable transmission, not illustrated, which is normally connected to the rod 3 in correspondence with this recess.

In use, the opposite end 3a of the rod 3 from the projection 5 is coupled for rotation with the driven member C of the device whilst the opposite end 2a of the rod 2 is articulated to the control member B of the device. The linear movement of the control member B fixed to the rod 2 is transformed into rotary motion of the driven member C fixed to the rod 3 as a result of the pivoting of the transmission lever 2 and of its extension and contraction, achieved by means of the relative sliding of the rods 2 and 3.

## Claims

1. A control device for motor-vehicle air-conditioning systems, including a control member in the form of a linearly-movable slider, a driven member in the form of a rotary element and an intermediate transmission member for transforming the linear motion of the control member into rotary motion of the driven member, characterised in that the transmission member comprises an extensible and contractible lever (1) constituted by two parallel, superposed rods (2, 3) each of which has a longitudinal slot (6, 7) in which a projection (4, 5) of the other rod is slidably engaged; one end of (3a) of one of the two rods (3) being couplable for rotation with the driven member C and the other rod (2) being connectible at the opposite end (2a) to the control member B.

2. A device according to Claim 1, characterised in that the projection (4, 5) of each rod (2, 3) has a wider, retaining end (4a, 5a) with dimensions larger than the width of the slot (6, 7) of the other rod (3, 2) and in that the slots (6, 7) have respective wider end portions (6a, 7a) for the insertion of the heads (4a, 5a) during assembly of the transmission lever (1).

3. A device according to Claim 1 or Claim 2, characterised in that the slot (7) of at least one of the rods (2) has an intermediate recess (8) on one side to serve as a seat for the positioning and retention of the projection (5) of the other rod (6) under the action of a lateral force applied to the transmission lever (1).

4. A device according to any one of the preceding claims, characterised in that the projections (4, 5) have rectangular cross-sections.

# FIG_1

# FIG_2

EP 0 337 957 A2

FIG. 3

EP 0 337 957 A2